# EUROPEAN PATENT APPLICATION

(11) **EP 2 749 972 A2**
(43) Date of publication of application: **02.07.2014**
(21) Application number: 14155858.5
(22) Date of filing: 07.09.2009
(51) Int. Cl.: G05B 19/401, B23Q 17/00

(54) **A device for calibrating a service cell**

(62) Divisional of application: 09848907.3
(71) Applicant: Fastems Oy AB, 33840 Tampere (FI)
(72) Inventor: Lylynoja, Ari, 37560 Lempäälä (FI); Nieminen, Harri, 37470 Vesilahti (FI); Kalliomäki, Jari, 33900 Tampere (FI); Peltomaa, Harri, 33960 Pirkkala (FI); Pietilä, Jukka, 37120 Nokia (FI)
(74) Representative: Tampereen Patenttitoimisto Oy

(57) **Abstract**

We have developed a method, and a device for calibrating a service cell, the device comprising: a fixing element for fixing the device to a device to be connected to the service cell, a coordinate element for defining the position of the device to be served, the coordinate element comprising at least two coordinate marks, coordinate protrusions or coordinate recesses, connecting means for connecting the coordinate element and the fixing element in such a way that a coordinate element can be easily replaced with a different one in the fixing element.

## Description

### Field of the invention

The invention relates to a a device for calibrating a service cell..

### Background

The development of industrial automation makes it possible to increase the efficiency and productivity of firms carrying out industrial production, and to improve their quality of production. Automated machining stations can be used to manufacture large quantities of pieces quickly and completely without human intervention in the manufacture between pieces. The machining stations can also be used to manufacture very demanding pieces, whose manufacture involves several stages of operation. A service cell may comprise at least one robot that handles and transfers pieces between a machine tool and a material station. The service cell may comprise one or several devices which are served by the cell. The device to be served may perform various operations on the piece, such as machining, washing, measuring, or assembling.

The programming of the service cell is normally done by means of the programming control panel of the robot. The operator teaches the robot the paths of movements that it should follow when manipulating a new piece. For manipulating a piece, the robot will need several different paths of movement, of which most must be taught with precision. Some pieces may need to be gripped several times, at different points, to be placed in the correct position, for example, in the socket of a machine tool. Teaching these paths of movement requires high precision and carefulness. This means that the operator must typically take the programming control panel inside the robot cell and move the robot by manual drive at a low speed to achieve the required precision. The robot must be taught all the points needed for manipulating a piece, to which points it should move in a given sequence. In the teaching, one should also take into account the path, along which the robot arrives at a taught point, to avoid a possible collision.

It is laborious to teach the robot a new piece by the control method of prior art. Even if the teaching process is relatively simple, its implementation with the programming control panel makes it challenging, particularly for unexperienced operators. It is also difficult to run programs by using control methods of prior art. It has been found that for operating a service cell, training of several days is often required, and still a significant amount of time is consumed in teaching a new piece and starting the machining. Consequently, there is a need for improved control methods for controlling machining stations.

### Short summary

According to a first aspect of the invention,
a device is provided for calibrating the service cell, comprising a fixing element to fix the device to the device to be served by the cell; a coordinate element for determining the position of the device to be served, the coordinate element comprising at least two, three, four, or more coordinate marks or coordinate protrusions or coordinate recesses; and means for combining the coordinate element and the fixing element in such a way that the coordinate element can be easily replaced with a different one in the fixing element. According to an embodiment, the fixing element is a cylindrical spindle, by which the device can be fixed to a lathe, and the coordinate element is a circular disc comprising at least two pegs, to which the means for defining the position of the device to be served can be supported.
According to an embodiment, the fixing element is a cylindrical spindle, by which the device can be fixed to a lathe, and the coordinate element is a circular disc comprising at least two pegs, to which the means for defining the position of the device to be served can be supported.

According to an embodiment, the service cell comprises at least one set of manipulating means for manipulation of pieces, at least one control unit for controlling the manipulation of pieces, at least one display device for displaying information to the operator.

According to different embodiments of the invention, the service cell, the control unit, the computer program and the method can be used to define more state data on the state of said service cell and to select, from at least two control symbols, one control symbol on the basis of this state data, to display a second control symbol to the operator by means of an active graphic element, the control symbol representing a second control command, to receive the second control command from the operator by means of the active graphic element, and thereby to control the manipulation of the piece on the basis of the second control command. The service cell, the control unit, the computer program, and the method may also be used to convert at least one control command received from the operator to secondary, for example device-oriented control commands and to control the manipulation of the piece by these secondary control commands in such a way that several stages of operation are performed as a result of a single control command received from the operator. The service cell, the control unit, the computer program, and the method may also be used to control one part of the service cell, such as a robot or a material station, and another part, such as a machine tool, by means of device-oriented control commands. The service cell, the control unit, the computer program, and the method may also be used to control the service cell by a parametric control method, in which measurement data or quantity data relating to a material piece or a finished piece is used for setting up device-oriented control commands, as well as to receive and store measurement data and quantity data. The service cell, the control unit, the computer program, and the method may also be used to display said active graphic element to the operator and to receive a control command by means of one or several of the following: a cursor-controlled display, a touch sensitive display, a haptic display, a holographic display, a three-dimensional display, and a display consisting of several elements. The active graphic element may be, for example, a graphic element or area displayed on a touch sensitive display, a soft key in which an active display element represents a physical button, or a mouse-controlled display element. The service cell may comprise, for example, a machine tool, such as a processing centre (a machining centre, a sheet metal working centre, a multi-function machine, etc), or a general-purpose machine (a lathe, a grinder, a drilling machine, a milling machine, a bending machine, a die-casting machine, etc), an assembling device, a loading point, a robot station, a cleaning device, a measuring device, a welding station, a deburring station, a dimensioning machine, a cutter, a surfacing machine, an air blaster, or another corresponding device. The state data may be "waiting", "in operation", "completed", "error", "collision", "no piece", "speed of motion data", "production state data", "full", "empty", and state data combined of any of these or other state data. The service cell, the control unit, the computer program, and the method may also be used to display some state data in connection with the active graphic element. The service cell, the control unit, the computer program, and the method may also be used to display several control symbols by using several active graphic elements. The service cell, the control unit, the computer program, and the method may also be used to arrange the graphic elements in a substantially circular pattern and to display state data substantially in the centre part of said circular pattern.

To achieve the aim of the invention, the device according to the invention is primarily characterized in what is presented in the appended claim 1. The dependent claims will describe other embodiments of the invention.

### Description of the drawings

In the following, the invention is described in more detail with reference to the examples and the appended drawings, in which
- Fig. 1: shows a device of prior art for controlling a service cell,
- Fig. 2: shows a service cell according to an example, in which the machining of a piece can be controlled by a control device according to an example,
- Fig. 3: shows a device according to an example for controlling a service cell,
- Fig. 4a: shows the user interface according to an example for a device for controlling a service cell,
- Fig. 4b: shows six symbols or icons to be used in the user interface,
- Fig. 5: is a flow chart of a method according to an example for controlling a service cell, and
- Fig. 6: shows a device according to an example for calibrating the control of a service cell.

### Detailed description of the example embodiments

In the following, the invention will be described by way of example in connection with a service cell intended for the processing of pieces. The service cell may comprise means for receiving and delivering pieces, for example a material station, a carriage, a conveyor, a storage automate, or another corresponding means, on or in which the pieces to be processed and/or processed pieces can be placed. The service cell may comprise means or devices, for example a robot, for manipulating and moving pieces from one place to another as well as for changing their position and direction. The service cell may comprise one or more control units for controlling the service cell, for example the control unit for a robot, which may be, for example, a suspended programming control panel. The service cell may also comprise means for connecting to a device to be served, which device is part of the processing cycle and is served by the cell. The device to be served may have an independent control of its own, or it can be controlled from the side of the service cell, for example by means of the control panel of the service cell. The device to be served may be in whole or in part inside the service cell, or in whole outside the service cell.

The device to be served, being part of or connected to the service cell, may be, for example, a machine tool, such as a processing centre (a machining centre, a sheet metal working centre, a multi-function machine, or the like) or a general-purpose machine (a lathe, a grinder, a drilling machine, a milling machine, a bending machine, a die-casting machine, or the like). The device to be served may also be an assembling device, a loading point, a robot station, a cleaning device, a measuring device, a welding station, a deburring station, a dimensioning machine, a cutter, a surfacing machine, an air blaster, or another corresponding device. The device to be served may also be a combination of such devices, and there may be one or several of the devices to be served. The service cell may also comprise other devices belonging to the processing cycle and controlled by the control unit, for example a station for changing the grip, a deburring cell, or the like.

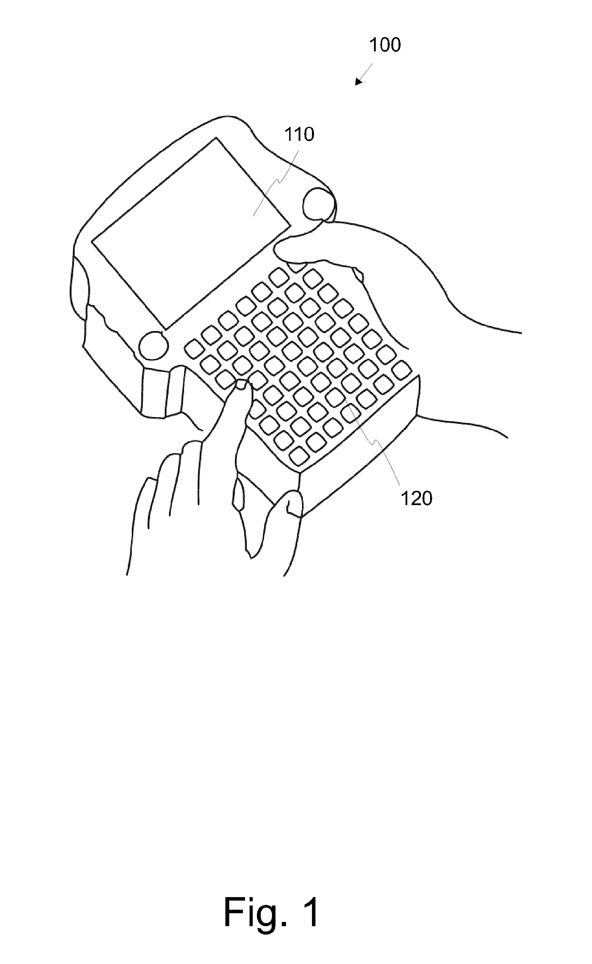

Figure 1 shows a robot control device of prior art, a so-called programming control panel. The programming control panel 100 comprises a display 110 and several control buttons 120 for entering control commands for a robot. By pressing the control buttons 120 it is possible to input program commands or give instructions for the operation of the parts of the service cell, for example to control a robot and other devices belonging to the service cell and to give operation commands for devices connected to the service cell. The programming control panel may also comprise a switch for detecting that the operator holds the programming control panel in his/her hand, wherein the operation of the service cell is only allowed when the switch is pressed down. The large number of buttons 120 implies that an unexperienced operator will have a high threshold to use the programming control panel, because remembering all the buttons and their functions requires quite a lot of experience on the use of the programming control panel.

In the following, we will present an operation of prior art to introduce a new piece in a service cell, in which at least one piece has been programmed and taught previously.

The operator needs to define the piece-specific settings for a program to be run, including the size and palletizing pattern of the new piece. The palletizing pattern refers to the order and the definition of the location of pieces on a material carriage reserved for them. The palletizing pattern has to be defined in order to manipulate the pieces automatically. These new features relating to the new work piece must be entered by the operator by using the programming control panel.

The operator copies a previously entered piece-specific program as a template for the program of the new piece. If the stages of operation in the processing cycle are not correct, the operator must edit the processing cycle as desired. The processing cycle refers to all the sequences of operations and movements performed by the robot on the work piece. Different work pieces may have the same processing cycle, but it is also possible that they have different processing cycles, so that it will be necessary to define the processing cycle in a piece-specific way.

Next, the operator checks that the correct type of gripper for manipulating the piece is defined in the program. There are various grippers depending on the size, shape, material and weight of the piece, as well as the processing cycle. The operator then teaches the robot of the service cell the paths of movements that it should follow when manipulating the new piece. When manipulating the piece, the robot will need several different paths of movement, most of which have to be taught with precision. Some pieces may need to be gripped several times at different points to place them in the correct position, for example, in the socket of a machine tool. Teaching such paths of movement requires high precision and carefulness. In practice, the operator must take the programming control panel inside the robot cell and move the robot by manual drive at a low speed to achieve the required precision.

The robot must be taught all the points needed for manipulating a piece, to which points it should move in a given sequence. In the teaching, one should also take into account the path of movement, along which the robot arrives at a taught point, to avoid a possible collision. Factors to be taken into account also include the type of movement, the speeds of movements, articulation configurations, singularity, cycle type, and active tool point. Finally, the operator must test the program by manual drive at a low speed. Programs can be run step by step, which is a good way of testing the paths of movement and the functionality of the program.

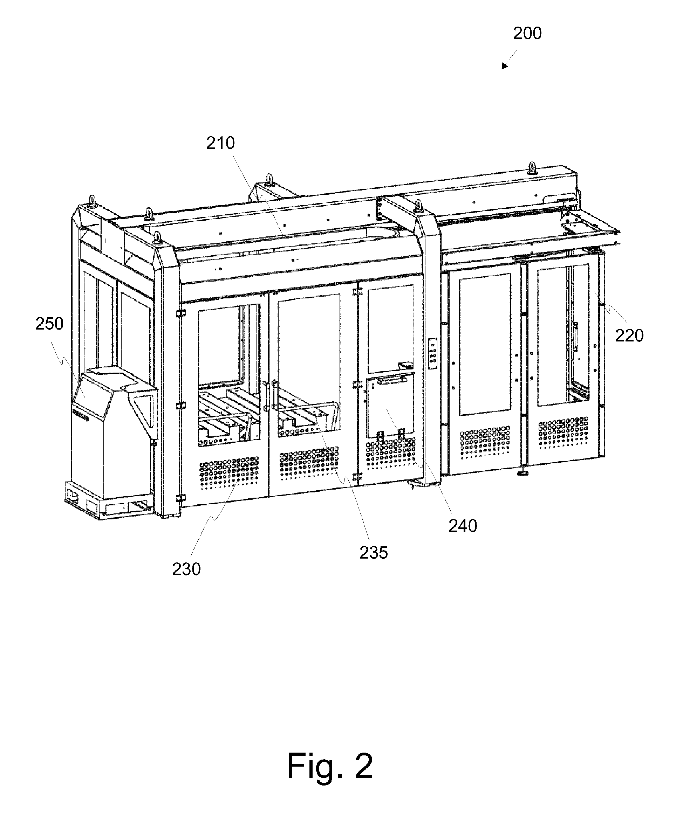

Figure 2 shows an example of a service cell, in which the manipulation of a piece can be controlled by a control device according to the invention. The service cell or automation island 200, for example Fastems® robot cell RPC-20G, may consist of a robot, such as a Fanuc® M-16iB/20T robot fixed to guide bars 210 on the top beams of the cell, as well as a machine tool connected to the cell. In addition to the robot, the service cell RPC-20G comprises walls 220 encompassing the working area of the robot, two material stations 230, and one sampling station 240. The material stations of the service cell are replaceable, so that it will be easy to move pieces in and out of the service cell. The figure also shows a robot programming control unit 250 placed at the end of the cell. On the wall of the cell there is also a station 240 into which the operator may ask the robot to deliver a sample piece.

A Fanuc® robot control unit can be used for controlling the robot. The robot may comprise, for example, six axes, one of which is a linear axis and five are so-called rotating axes. The robot is equipped with a gripper whose control unit may be provided, for example, in the arm of the robot. There may be grippers of various shapes and sizes depending on the process of manipulation of the work pieces, such as the size, shape, material and weight of the piece to be gripped, as well as other factors on the gripping. The fingers of the gripper may be staggered, wherein the same gripper can be used for gripping pieces of different shapes and sizes. It is also possible to use grippers with adjustable fingers.

The robot may extend to all the points in the cell where pieces are intended to be processed. The control unit is responsible for controlling the robot. The control unit may consist of a programming control panel and an actual control unit that comprises, among other things, a logic. The control unit may also comprise buttons for the operator to enter simple commands to the robot. The control unit may also be connected to a network by an Ethernet cable. This makes it possible to analyze various situations over a remote connection. The robot receives its movement commands from the logic I/O blocks which are controlled by the control unit of the robot in its program code in the TP language. The logic comprises various I/O types, of which the most important ones to be mentioned are digital I/Oa, analog I/Oa, digital I/Oa for the movement of the robot's arm, as well as digital I/Oa for a possible external control unit (PLC). Three different programming languages are used in the control unit of the robot. A PMC based program is used for logic programming. A Karel based program is used for programming on the system level. The program language in which the processing cycle of the robot is programmed is called TP. Both Karel and TP based programs are used for starting and stopping automated production.

The machine tool is a device connected to the automation island, *i.e*. the service cell, to perform processing work on a piece to be machined. There are various machine tools, depending on the piece to be machined and the production process. The most common machine tools in connection with a robot cell are lathes. Other possible machine tools include, for example, a processing centre (a machining centre, a sheet metal working centre, a multi-function machine, or the like), or a general-purpose machine (a lathe, a grinder, a drilling machine, a milling machine, a bending machine, a die-casting machine, or the like), an assembling device, a loading point, a robot station, a cleaning device, a measuring device, a welding station, a deburring station, a dimensioning machine, a cutter, a surfacing machine or an air blaster, or another corresponding device. The machine tool is placed in the service cell in such a way that the robot extends to serve the machine in a piece exchange area. The machine tool can also be used manually when the robot is switched off.

The service cell or island refers to the space in which the robot and the machine tool collaborate to accomplish production. The cell is encompassed by safety walls preventing access to the cell when the robot is in operation. However, each wall comprises windows so that the operators can be constantly aware of what is taking place in the cell. If, for any reason, any of the doors of the cells opens when the robot is in operation, the robot will give an alarm and all the functions of the robot will be stopped until the doors are closed and the alarms are reset. The walls of the cell are made of steel and the windows of polycarbonate. The cell may be movable or it may consist of movable modules, or the cell may have a stationary construction.

The robot cell may comprise one or more material stations 230 which may comprise one, two or more so-called material carriages 235. The purpose of these carriages is to provide a place from where the robot can fetch pieces to be machined, to take them to the machine tool. When the machine tool completes the machining step, the robot will bring the piece back to the carriage. The finished piece can be brought either to the same carriage or a different carriage from which the blank was fetched. Advantages of the material carriages include low price and movability. Carriages and good movability allow more freedom in the material logistics. The carriages are not mounted in a stationary manner, so that they can be removed from the cell and also moved freely outside the cell. The pieces to be machined lie on the carriages according to specific palletizing patterns. The carriages are always locked in the same locations, thanks to guides on the floor of the cell. The same carriage may comprise several layers of the same piece to be manufactured. If there are more layers than one, the cell must have another empty carriage onto which the robot can bring the finished pieces. After the machine tool has machined all the pieces in the cell and the robot has brought them to the carriage reserved for them, a notice of this is given to the operator. The operator can then, if necessary, give the robot more pieces to be machined, by replacing the carriage with another one, or by filling the carriage in the cell with blanks.

The service cell, or robot cell, automatizes production in mechanical engineering industry. With improved automation, the production can also be made more efficient and of better quality than before. Furthermore, the production costs can be reduced by applying automation. The basic stages of operation of a machine tool, for example a lathe, to be connected to a robot cell are the following: The robot picks up a piece to be machined from a place reserved for it, by a specific gripper fixed to the mounting flange of the 6-joint of the robot. The robot takes the piece to be machined to the machine tool, for example to the socket of the lathe. The machine tool starts to machine the piece. If there is a need to turn the piece in the machine tool during the machining, the robot goes and picks up the piece from the machine tool and turns it 180 degrees. When the machine tool finishes the stage of operation, the robot is instructed to fetch the piece from the machine tool. The robot picks up the finished piece from the machine tool, for example from the socket of the lathe, and brings it to a place reserved for it in the material station. After this, the robot picks up a new piece to be machined and brings it to the machine tool. Alternatively, the robot may comprise a double gripper, in which case the robot can carry two work pieces at the same time. In this case, the processing cycle begins by fetching the finished piece from the socket of the working machine and replacing it with a blank piece.

Thanks to the double gripper, the cycle becomes faster, because the robot already carries a blank to be inserted in the machine when it moves to fetch a finished piece from the machine tool. In addition to the steps presented above, the processing cycle of the robot may also comprise other steps relating to controlling the piece. Such steps include re-gripping a blank, turning a blank, blasting of air into the socket of the machine tool in connection with the processing of the piece, turning the work piece in the machine tool, re-gripping the finished piece, turning the finished piece, and leaving a sample piece.

After all the pieces to be machined in the cell have been finished and brought to the material station, the operator removes the finished pieces from the cell. If there is a need to make more pieces of the same kind, the operator supplies the cell with a new batch of pieces to be machined and starts the program cycle for the selected product. The operator can also change the type and program of the piece to be machined. If necessary, he/she may also create a new program for a new type of a piece.

The operators of a robot cell can be divided roughly into two groups of operators: so-called basic operators and advanced operators. The basic operators may operate the robot cell daily or almost daily, but they only apply the basic functions of the robot cell. The advanced operators also apply functions other than the basic functions of the robot cell. The advanced operators can, among other things, teach and program processes of new work pieces for the robot by means of the programming control panel. The operators are normally persons working in an engineering workshop who are familiar with machine tools and the work relating to them. The operators may be operators whose job is only to operate said robot cell. The operators may also be, for example, production engineers who may use the robot cell slightly less frequently and for different purposes. Consequently, the standard of education of the operators may vary from vocational basic training to a university degree.

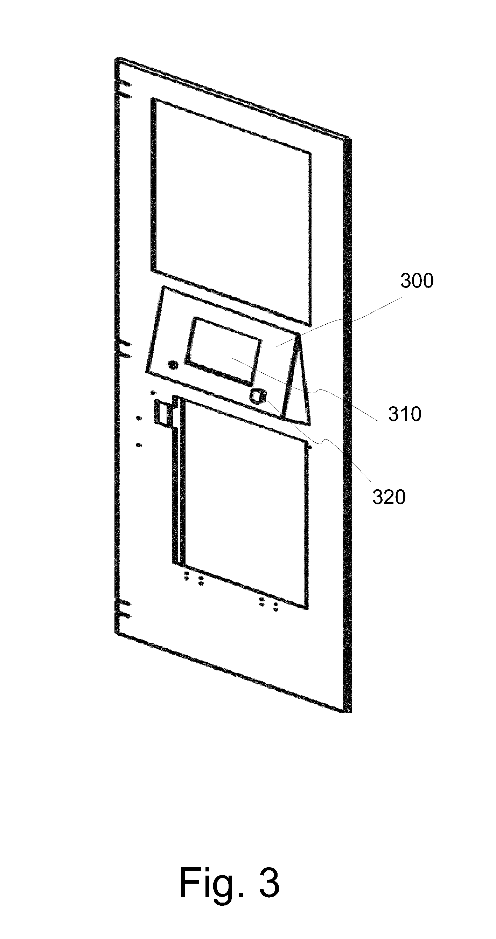

Figure 3 shows a device according to an example for controlling a service cell. The control device 300 comprises a touch sensitive display 310, an emergency stop switch 320, and interfaces for controlling different parts of the service cell. Because the touch sensitive display can be used by mere fingers without any accessories, its use is often faster than the use of a conventional graphic user interface. Furthermore, the use of fingers simplifies the use of the user interface also because the operators always know where their fingers are, unlike, for example, the cursor of a mouse which must sometimes be looked for on the display of a computer. The touch sensitive display can be arranged to function in such a way that an operation is considered activated first when the operator takes his/her fingers off the surface of the touch sensitive display, or in such a way that the operation is considered activated as soon as the operator touches the display.

The user interface can give the operator a response so that the operator can make sure that the user interface has received the operator's command. Without the response, situations might easily occur in which the operator presses the same button several times because he/she does not know if the user interface accepted the previous pressing. The touch sensitive display gives not only visual feedback but also tactile feedback, that is, feedback based on touching. In addition to the visual and tactile feedback, it is also possible to give the operator e.g. auditive feedback, for example via an internal or external speaker.

Sufficient space can be left between the buttons in the user interface of the touch sensitive display, to avoid incorrect operations caused by poor pointing accuracy of a finger. In the design of the user interface, it is also possible to take into account colour blind and elderly operators, wherein the buttons should be explicit, distinct and sufficiently remote from each other. The buttons may also differ from each other in their features other than mere colour, for example in shape.

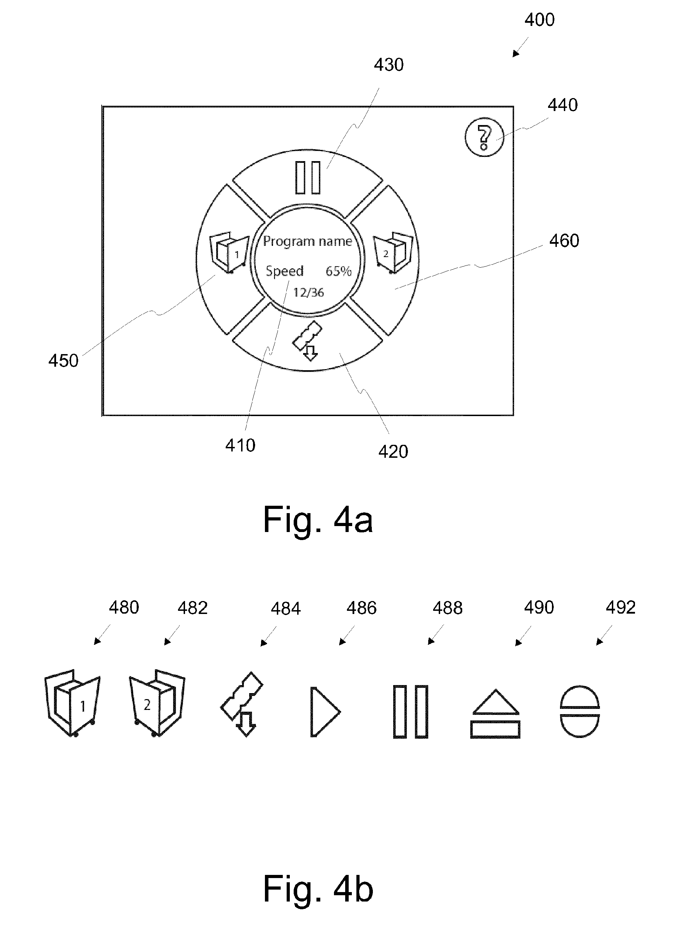

Figure 4a shows an example of a user interface of a device for controlling a service cell, and more precisely, a display image of a control display 400 of a user interface. In the image, a program called "Program name" is running, the speed of the robot is 65% of the maximum speed, and 12 pieces have been produced. This information is displayed in the centre 410 of the active user interface. The operator may change the speed by pressing one active graphic element, that is, the central circle 410, wherein a window is opened on top of this display for changing the speed. By pressing the lowest active graphic element, that is, the button 420, it is possible to order a sample piece. By pressing the uppermost active graphic element, that is, the button 430, the operator can stop the program to be run, or to re-start the program after it has been stopped. Consequently, the active graphic element in the same place can be used for different functions, depending on the state of the service cell. When the state of the service cell is changed, a different graphic element representing this new state can be retrieved onto the display. The state of the material stations or material carriages is displayed with elements 450 and 460 when the program is running, and when the program is stopped, these active elements can be used to modify the content data of the material carriages. Thus, it may also occur that the activation of an active element will, in one state, only lead to the display of more accurate state data or not lead to anything, whereas in another state, the active element may give a control command or its activation may lead to a display from which the service cell can be controlled. Instructions on the user interface can be displayed by pressing the question mark 440 at the upper right hand corner. The centre part 410 of the circle can be displayed in green colour which indicates that the robot has a program running. The green colour is natural to indicate that the robot has a program running, because the green colour symbolizes progress and safety, just as in traffic lights. The green colour is also otherwise a common colour in industry to indicate that a device is in operation.

The centre part of the circle can also be displayed in red colour which indicates an error. The program has thus been stopped and its running cannot be continued until the alarms have been reset. The alarms can be reset by pressing a "reset errors" button which is, in the alarm state, the same button 430 as the stop button in the normal state. By pressing the central button, further information on the active alarms can be displayed. A state change is not displayed merely by a change in the colour, so that also colour blind operators can make full use of the user interface. This feature is emphasized in the present case, because the red and green colours are involved. A common form of colour blindness is precisely red-green colour blindness.

The basic display of the user interface is a so-called control display, around which the user interface is built up. Using the control display, the operator can start, stop or change the program as well as monitor the states of the material carriages in real time. Furthermore, ordering a sample piece and resetting a robot error are entered via the control display. In other words, all the basic functions of the robot are carried out by means of the control display, so that the use of the user interface would be easy and intuitive.

If the control display has been active without the operator operating the touch sensitive display for some time, a screen saver display is turned on. On the screen saver display, it is possible to display, for example, the follow-up of the completion of pieces and the state of the robot in a way that is more visible to the operator. Thus, operators may detect from a longer distance, at which stage the operation of the service cell is proceeding. This feature has been introduced in the user interface to improve convenience of use, because the operator does not need to walk close to the touch sensitive display to see the state of the robot or the production. When the operator touches the surface of the touch sensitive display, the display image will switch to the control display again.

The platform for the user interface may be a cursor-controlled display, a touch sensitive display, a haptic display, a holographic display, a three-dimensional display, and a display consisting of several elements. The active graphic element may be, for example, a graphic element or area displayed on a touch sensitive display, a soft key in which an active display element represents a physical button, or a mouse-controlled display element.

Figure 4b shows, by way of example, seven symbols or icons used in the user interface. The first icon 480 from the left represents a material carriage 1 containing some blanks left so that the carriage is available to the robot. The second icon 482 represents a material carriage 2 in which all the blanks have been finished so that the robot can no longer use the carriage until it is replaced. The third icon 484 represents the ordering of a sample piece. The next three icons are the icons for 'start' 486, 'stop' 488 and 'select piece' 490. The last icon 492 represents resetting of errors.

The symbols or icons used in the user interface, for example display images and other images, can be stored on an external data carrier, such as a compact flash (CF) card, a secure digital (SD) card, a multimedia card (MMC), a memory stick, a universal serial bus (USB) or firewire flash drive, a solid state disc (SSD), or an internal data carrier, such as a hard disc, an SSD or a flash memory. The images may also be attached directly to a user interface data file, but if there is a large number of images, like in this user interface, the data file may become large.

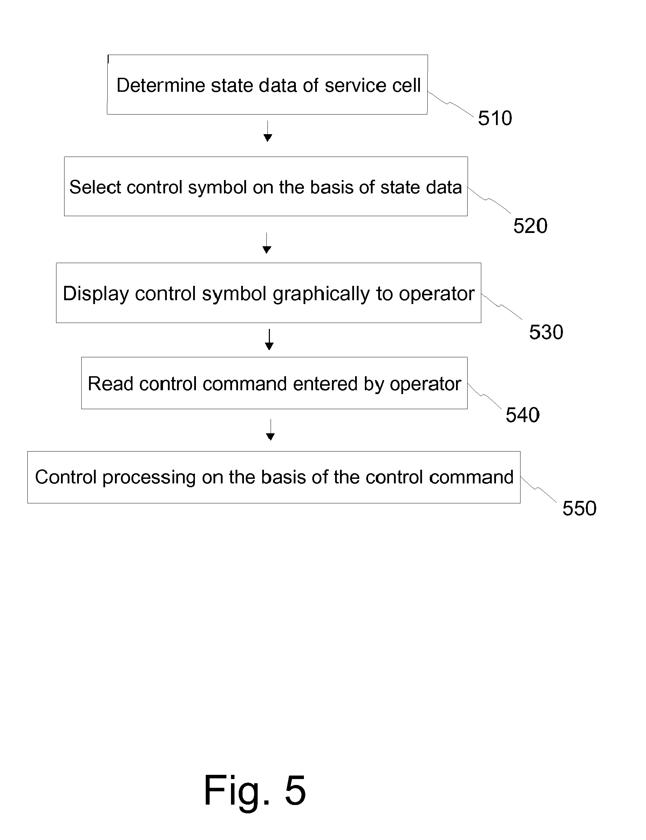

Figure 5 shows a flow chart illustrating an example of a method for controlling a service cell with a control unit, for example a touch sensitive display. The method first comprises determining 510 state data on the state of said service cell, and selecting 520, on the basis of the determined state data, a control symbol to be displayed 530 as an active graphic element to the operator. This control symbol represents a specific control command that can be received 540 from the operator by means of the active graphic element, for example by pressing a button on the touch sensitive display. On the basis of this control command, controlling 550 of the manipulation and/or machining of a piece will take place.

The unit for controlling the service cell, that is, the user interface unit, thus utilizes state data on the state of the service cell. The user interface comprises at least one active graphic element, for example a button on the touch sensitive display, which can be pressed by the operator to give a control command. In the present user interface, the function of the user interface has been made better and more explicit by utilizing information on the state of the service cell for selecting different symbols on the active graphic elements, depending on the state of the service cell; correspondingly, a different control command will thus be entered by activating the active graphic element, for example by touching. For example, the uppermost active graphic element or button may have a symbol representing starting, a symbol representing stopping, or a symbol representing the resetting of errors. Thus, a symbol is displayed in connection with the active graphic element, to represent the control command of the active graphic element and the state of the service cell at the time. This symbol can be selected from user interface symbols stored on a data carrier. It is also possible that the whole active graphic element is stored on a data carrier, from which it is selected to be displayed.

One of the graphic properties of the user interface is consistency. External consistency has been improved with respect to the user interface of prior art, among other things, by symbols which are familiar from everyday life, and by the sequence of icons and functions. For example, the steps of the processing cycle are displayed in the same sequence as they occur in reality, and the icons for carriages are in the same order as the carriages are inside the service cell. Internal consistency has been implemented graphically by using the same icon elements to represent the same thing. For example, blanks look alike in all the icons with a blank. Furthermore, the button for the quick instructions of each display can be found in the same location on each display of the user interface.

Because the operators of the user interface come from different countries and speak different languages, the role of the icons used in the user interface is important. The functions are largely represented by means of various icons. In this way it has been possible to reduce the quantity of text in the user interface, which will facilitate the localization of the user interface and simplify and accelerate the use of the user interface. An important feature of the icons is the fact that they are evident and explicit. It is much easier for an operator to use a user interface with explicit icons than a user interface with icons that need to be remembered by the operator.

There are two kinds of icons. There are icons which resemble, in their appearance, the function that they represent. Beyond the present subject matter, such images, for example at airports, include the icons for arriving and departing flights, depicting a plane descending or ascending. There are also images which must have become familiar to the operator on the basis of previous experiences. Such an icon does not, in its appearance, resemble the function in question. As an example, one could mention the icon representing car alarm blinkers, which is a triangle with the apex pointing upwards. The majority of people who drive a car know what will happen by pressing said button even if it does not resemble the alarm blinkers of a car in any way. In the present user interface, icons belonging to both groups are utilized.

In addition to the control and screen saver displays, a work piece list display is also needed relatively often. It is used by the operator to select a work piece that he/she wants the robot cell to make. The displayed list includes the work pieces that the operator has taught the robot. On the display 'select mode of programming', the operator selects the mode of programming that he/she wants and that is suitable for the purpose, to be used for programming the robot. There are three different modes of programming that can be selected:
1) Parametric mode of programming, which can be used for pieces whose dimensions remain within given limits. The minimum and maximum dimensions of the pieces are client-specific. The processing cycle of the piece can be selected according to the need. When this mode of programming is used, only the touch sensitive display is used.
2) Guiding mode of programming, which is provided to help operators if they want to teach the robot such pieces that are difficult to program parametrically. First, the operator selects the desired steps of the processing cycle on the touch sensitive display, after which he/she programs said steps by means of the programming control device. The display image on the touch sensitive display will be changed automatically according to the step of the program code in progress by the operator. Consequently, the operator can monitor or check on the touch sensitive display, which points he/she is teaching each time. There is no need to scroll between different subroutines with the programming control device, because this is done automatically on the basis of the selected processing cycle. Consequently, the operator will only need to drive the robot manually to the desired points and to store these in the memory of the control unit of the robot.
3) Mode of programming for advanced operators. By means of this mode of programming, operators can teach the robot a new piece in the same way as in the user interface of prior art. The only difference is that the operator has to enter the name of the piece by means of the touch sensitive display. After that, he/she can program the new piece by means of merely the programming control device in the sequence he/she wants.

Both the parametric mode and the guiding mode of programming contain several steps before the teaching of a new piece is completed. The parametric programming comprises, for example, 15 steps and the guiding programming comprises, for example, 3 to 11 steps, depending on the processing cycle selected. After the operator has taught the new work piece, the image of the touch sensitive display will change back to the list of work pieces which now also comprises the new, recently taught work piece.

The use of the robot cell by means of the user interface of the example requires cooperation between the robot's control unit and the user interface unit. The robot's control unit contains a program code made in the TP language, by means of which it controls the actuators moving the robot. Thus, the touch sensitive display does not give movement commands directly to the robot. Instead, various commands are entered via the touch sensitive display to the digital I/O data and registers of the robot. In other words, the commands of the touch sensitive display are converted to secondary or device-oriented control commands. The control unit of the robot monitors these registers, variables and commands, and uses them to control the actuators of the robot. In a corresponding manner, the control unit of the robot provides the touch sensitive display with information via the digital I/O data and the registers. The control commands obtained from the operator are thus converted to several control commands which are followed by the robot in its operation.

When the control unit of the robot obtains commands from the operator via the touch sensitive display, by means of the registers and the I/O data, it analyzes them in its own program code and operates according to them. For example, the program of the robot is started by pressing the start button on the touch sensitive display to set the start bit of the robot from zero to one. The robot's control unit observes this change and gives the robot a command to start. After this, the touch sensitive display detects the changed state of the robot by monitoring the bit that represents the state of the robot.

Another example could be the teaching of a new work piece. If the operator teaches the robot to manipulate a new work piece in the guiding mode, a command is input by means of the touch sensitive display via the registers in the control unit of the robot to copy a correct type of program template for the operator. Next, the control unit of the robot gives information about the progress of the programming to the touch sensitive display. On the basis of this information, the touch sensitive display can change the display image to the respective type.

The touch sensitive display, that is, the user interface unit, observes and analyzes registers and I/O data and changes the displays accordingly. For example, information about an alarm in the robot enters a register reserved for it, so that the touch sensitive display will know to change its display image. Furthermore, the touch sensitive display comprises internal scripts which it runs under certain conditions. This enables a deeper analysis of the registers and the I/O data as well as more versatile measures.

Next, the teaching of a piece by the parametric mode of programming will be discussed. In the parametric mode of programming, the operator enters measurements and other data of a new work piece via the touch sensitive display into a data file, from which they are then read and utilized in the program of the robot. Advantages of the parametric mode of programming include ease of use, because when applying this mode of programming, there is no need to use the programming control panel of the robot at all, but it is possible to work simply with the described user interface, for example a touch sensitive display. The work piece must be limited to certain measurements, to avoid collisions. Because the length and the diameter of the piece are limited, there is no risk of collision with the walls, supporting structures or the machine tool in the cell.

There may be, for example, more than twenty parameters to be entered for teaching a new piece, of which some parameters are entered by the operator and the other parameters are entered automatically to the control unit of the robot, without intervention by the operator. These three parameters do not relate to the physical properties of the new piece but the processing of the new piece. The inquiries on parameters are divided into suitable groups in the user interface, forming the steps of the parameteric mode of programming.

In addition to the parameters, the operator gives information about the stages of operation which are intended to be implemented for the new piece. This gives the operator freedom in teaching the new piece, because he/she can only teach those steps which he/she finds necessary. When the programming of the new work piece is finished, it still needs to be tested. This is done so that each work piece has a parameter representing the test mode, which is always turned on after a new piece has been taught. After this, the operator has to run the movements of the new work piece step by step from one point of movement to another. In the testing step, the initial value for the speed of the robot is set to, for example, 20% of its maximum speed. After the work piece has been tested, the operator can modify the test parameter to turn the test mode off.

The teaching of a new work piece by the parametric mode of programming may proceed, for example, as follows:
1) Giving the new work piece a name and possible auxiliary data.
2) Selecting those steps of the processing cycle that are to be taught.
3) Entering piece-specific parameters, such as the height and width of the blank, the height and width of the finished piece, the method of gripping, etc.
4) Teaching of the new work piece is completed.
5) Testing the new work piece.
6) Taking the new work piece into production.

The work piece that was programmed in the parametric mode can also be modified afterwards. If there is a need to modify, for example, the auxiliary data or some dimensions, correction coefficients or any other parameters of the work piece, this is possible. The modification of the work piece is done in the same way as the programming of a totally new parametric work piece. The only difference is that the initial values for the parameters are the values previously entered for the piece by the operator.

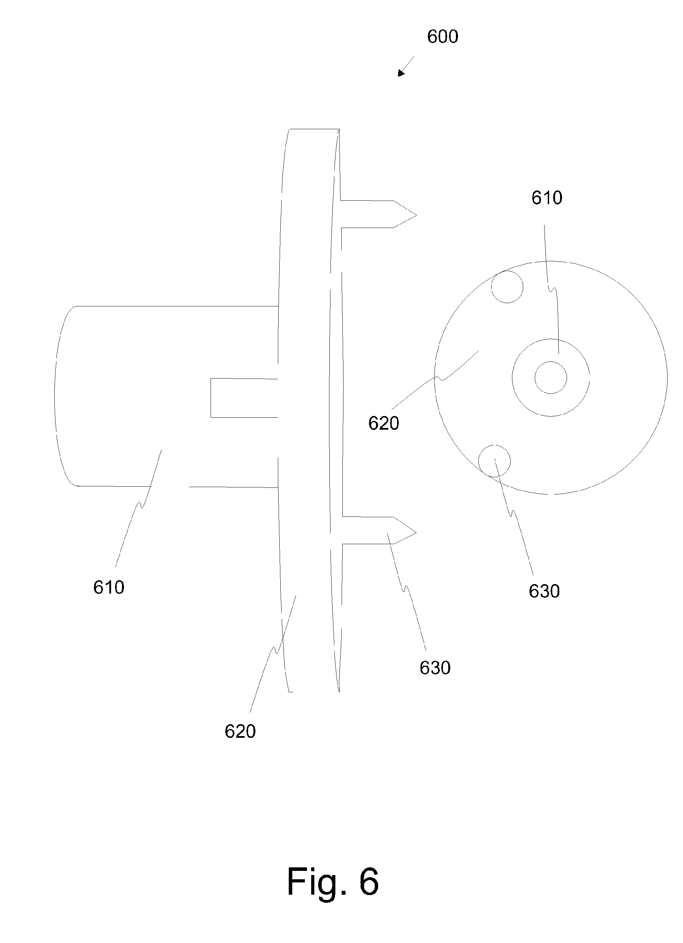

Figure 6 shows a device according to an example for calibrating the control of the service cell, seen from the side (on the left hand side) and from the end (on the right hand side). The device 600 comprises a fixing element 610, for example a spindle, for fixing the device to a machine tool connected to the service cell, and a coordinate element 620, for example a circular disc, for determining the position of the machine tool. This coordinate part comprises at least two coordinate marks, coordinate protrusions or coordinate recesses 630, by means of which the coordinate system of the robot can be defined accurately. There may also be three, four or more, for example ten or twenty coordinate marks. The coordinate marks may also be patterns deviating from a point-like mark. The coordinate marks may be set so that they define the space or plane as firmly as possible, for example in the same circular plane at a direct angle on the perimeter of the circle. The fixing element and the coordinate element are connected to each other by connecting means so that a different coordinate element can be easily replaced in the fixing element, for example by using screws.

We shall now explain the guiding mode of programming. The purpose of the guiding mode of programming is to facilitate the teaching of the robot by means of the programming control panel. In the guiding mode of programming, the programming control panel of the robot and the touch sensitive display collaborate in an interactive way. Furthermore, the teaching of a new piece has been facilitated by automating certain functions in the programming control panel. The operator does not need to shift from one subroutine to another, but the programming control panel of the robot will automatically move to the desired points of movement. In the same way as in the parametric mode of programming, the operator defines those stages of operation which are to be taught in the processing cycle of a new piece. There are two kinds of a processing cycle for a piece, depending on whether the gripper used is one-sided or two-sided. If a one-sided gripper is used, the processing cycle begins with possible turning of the piece in the socket of the machine tool. On the other hand, if a two-sided gripper is used, the processing cycle starts by fetching a blank from a carriage. This means that, depending on the type of the gripper, the operator will be displayed a slightly different display image depicting the processing cycle. In both processing cycles, it is possible for the operator to define the desired steps of the processing cycle to be taught, and to exclude those steps that he/she does not want to be taught for a piece. It is consistent that the operator teaches the points of movement in the sequence of the processing cycle. In the parametric mode of programming, the sequence is not significant, because the order of inquiring the parameters will always remain the same, irrespective of the processing cycle.

After the operator has selected certain steps of the processing cycle, information of this will be transferred to the programming control panel of the robot. In the code of the programming control panel of the robot, the cursor is automatically moved to those points of movement which have been selected for the processing cycle by the operator. The control unit of the robot gives information about the point in the teaching process in progress by the operator. On the basis of this information, the image displayed on the touch sensitive display is changed. Consequently, the images on the touch sensitive display are automatically changed according to the point in the robot's code in progress. On the displays, the operator can see which point he/she is teaching each time, so that the operator can check the process of the teaching on the display, if necessary.

The sequence of the guiding mode of programming may be, for example, as follows:
1) Entering a name for the new work piece, and possible auxiliary data.
2) Selecting the type of gripper.
3) Selecting those steps of the processing cycle that are to be taught.
4) Teaching the points of movement by using the programming control panel of the robot. The step being taught at a time can be checked on the touch sensitive display.
5) Teaching of the new work piece is completed.
6) Testing the new work piece.
7) Taking the new work piece into production.

We shall now describe the mode of programming for advanced operators. In the mode of programming for advanced operators, only the program name and possible auxiliary data are entered via the touch sensitive display. The sequence of the mode of programming for advanced operators may be, for example, as follows:
1) Entering a name for the new work piece, and possible auxiliary data.
2) Entering and teaching the robot a new program by means of the programming control panel.
3) Stopping the programming process by pressing the "complete" button on the touch sensitive display.
4) Taking the new work piece into production.

The invention has been found to have several advantages. A service cell equipped with the interface according to the invention is easier to control, and the controlling can be managed even without training and significantly faster than by solutions of prior art. The elimination of errors is also on a higher level in the new user interface than in the user interface according to the prior art. In the old user interface, there was a great risk of typing errors in teaching a new piece, because the typing facility of the programming control panel is not very good. There was also the risk of errors in file copying, in which case programs of the robot might have been erased by accident. The new user interface does not involve these risks.

According to the invention, it is also possible to teach new work pieces by remote control, as well as to transmit said programs to the service cell over a network. For remote programming, it is also possible to provide a separate user interface, for example, a 'Web service' type user interface that utilizes the FTP (file transfer protocol) or http (hypertext transfer protocol) for the transmission of new programs. In this software, it is possible to use the same graphics as in the actual user interface. Consequently, corresponding to the elements of the actual user interface, it is possible to provide, for example over an http connection, a user interface that closely resembles the actual user interface. The new programs can be transmitted by using this or another user interface by means of http, ftp or another data transfer protocol from a remote computer to the service cell. It is also possible to transfer programs from one service cell to another in the same way. It is also possible to program several service cells from a remote computer.

The invention has been described above by way of example. It is obvious that with the development of technology, the implementation may differ from these example embodiments, still without deviating from the appended claims.

## Claims

1. A device (600) for calibrating a service cell, the device comprising:
- a fixing element (610) for fixing the device to a device to be connected to the service cell,
- a coordinate element (620) for defining the position of the device to be served, the coordinate element (620) comprising at least two coordinate marks, coordinate protrusions or coordinate recesses (630),
- connecting means for connecting the coordinate element and the fixing element in such a way that a coordinate element can be easily replaced with a different one in the fixing element.

2. The device (600) according to claim 1, in which
- the fixing element (610) is a cylindrical spindle, by which the device (600) can be fixed to a lathe, and
- the coordinate element (620) is a circular disc comprising at least two pegs, to which the means for defining the position of the device to be served can be supported.

3. The device (600) according to claim 1 or 2, wherein the service cell comprises
- at least one set of manipulating means for manipulation of pieces,
- at least one control unit for controlling the manipulation of pieces, and
- at least one display device for displaying information to the operator.
